(19) Europäisches Patentamt
European Patent Office
Office européen des brevets

(11) **EP 4 678 800 A1**

(12) **EUROPEAN PATENT APPLICATION**
published in accordance with Art. 153(4) EPC

(43) Date of publication:
14.01.2026 Bulletin 2026/03

(21) Application number: 23933108.5

(22) Date of filing: 22.11.2023

(51) International Patent Classification (IPC):
*D04H 1/645* (2012.01)    *B05D 7/00* (2006.01)
*C08J 5/04* (2006.01)    *D06M 15/05* (2006.01)

(52) Cooperative Patent Classification (CPC):
**B05D 7/00; C08J 5/04; D04H 1/645; D06M 15/05**

(86) International application number:
**PCT/JP2023/042002**

(87) International publication number:
**WO 2024/214334 (17.10.2024 Gazette 2024/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 11.04.2023 JP 2023064249

(71) Applicant: The Japan Steel Works, Ltd.
Tokyo 141-0032 (JP)

(72) Inventors:
• ISHIGURO, Ryo
Tokyo 141-0032 (JP)
• KIMURA, Koichi
Tokyo 141-0032 (JP)

(74) Representative: Simmons & Simmons LLP
(Munich)
Lehel Carré
Gewürzmühlstraße 11
80538 Munich (DE)

(54) **METHOD FOR PRODUCING NONWOVEN FABRIC SHEET, DEVICE FOR PRODUCING NONWOVEN FABRIC SHEET, AND NONWOVEN FABRIC SHEET**

(57) The present invention makes it possible to stably produce a nonwoven fabric sheet even when a liquid material with a low viscosity is used. This method for producing a nonwoven fabric sheet includes (a) a step in which a liquid material LM that contains a raw material and has a viscosity of 100,000 mPa·s or less is prepared, (b) a step in which a sheet-like coat of the liquid material LM is applied on a nonwoven fabric NW by a coating machine, (c) a step in which the nonwoven fabric NW is impregnated with the liquid material LM, (d) a step in which the liquid material LM with which the nonwoven fabric NW is impregnated is solidified and a nonwoven fabric sheet 50 is obtained, and (e) a step in which the nonwoven fabric sheet 50 is rolled up.

*FIG. 1*

**Description**

TECHNICAL FIELD

The present invention relates to a nonwoven-sheet manufacturing method, a nonwoven-sheet manufacturing apparatus, and a nonwoven sheet.

BACKGROUND ART

As the sheet manufacturing method, a manufacturing method of melting a raw material using an extruder and extruding an obtained molten resin to have a sheet shape from an extrusion molding die (T-die) has been widely known (see, for example, Patent Document 1 (Japanese Patent Application Laid-Open Publication No. 2020-146853)).

RELATED ART DOCUMENT

PATENT DOCUMENT

Patent Document 1 : Japanese Patent Application Laid-Open Publication No. 2020-146853

SUMMARY OF THE INVENTION

PROBLEMS TO BE SOLVED BY THE INVENTION

Incidentally, in this extruded molten resin, a predetermined distance (air gap) is provided from the extrusion molding die (T-die) to a cooling roll, and thus, the air gap distance has a phenomenon that is called "neck-in" causing an obtained film width to be narrower than a die width due to a self-weight, tension, speed, etc. of the molten resin.
At this time, if a viscosity of the molten resin is low, a neck-in amount tends to be large, and it may be difficult to manufacture a sheet having a desired shape.
Accordingly, an objective of the present invention in manufacturing a sheet made of a resin material is to provide a nonwoven-sheet manufacturing method and a nonwoven-sheet manufacturing apparatus capable of providing a sheet having a desired shape even if a viscosity of a liquid material containing a raw material is low. Other problems and novel characteristics will be apparent from the description of the specification and the accompanying drawings.

MEANS FOR SOLVING THE PROBLEMS

A nonwoven-sheet manufacturing method according to one embodiment includes: a step (a) of adjusting a liquid material containing a raw material and having a viscosity of 100000 mPa·s or less; a step (b) of applying the liquid material to have a sheet shape onto a nonwoven fabric by a coater; a step (c) of infiltrating the liquid material into the nonwoven fabric; a step (d) of solidifying the liquid material infiltrated in the nonwoven fabric, thereby providing a nonwoven sheet; and a step (e) of winding up the nonwoven sheet.
A nonwoven-sheet manufacturing apparatus according to one embodiment includes: a raw material container in which a liquid material containing a raw material and having a predetermined viscosity is adjusted and stored; a nonwoven-fabric carry-out part feeding a nonwoven fabric; a coater applying the liquid material onto the nonwoven fabric; an infiltration region in which the liquid material is infiltrated into the nonwoven fabric; a solidification region in which the liquid material is solidified, thereby providing a nonwoven sheet; and a sheet winder winding up the nonwoven sheet.
In the above-described nonwoven-sheet manufacturing method and nonwoven-sheet manufacturing apparatus, the liquid material is adjusted such that the viscosity thereof is 100000 mPa·s or less.

EFFECTS OF THE INVENTION

According to one embodiment, in a case of use of an extrusion molding die (T-die) for manufacturing the nonwoven sheet, the nonwoven sheet can be stably manufactured even if a liquid material having a viscosity causing a large neck-in amount is used.

BRIEF DESCRIPTIONS OF THE DRAWINGS

[FIG. 1] is a diagram illustrating a schematic configuration of a nonwoven-sheet manufacturing apparatus according to a first embodiment.

[FIG. 2] is a diagram for explaining a case of application of a gravure roll to a coater in FIG. 1.

[FIG. 3] is a diagram illustrating a schematic configuration of a nonwoven-sheet manufacturing apparatus according to a second embodiment.

[FIG. 4] is a diagram illustrating a chemical structural formula of glucomannan.

[FIG. 5] is a diagram illustrating a chemical structural formula of cellulose.

[FIG. 6] is a diagram illustrating a schematic configuration of a moisture collection apparatus using a nonwoven sheet.

[FIG. 7] is a diagram illustrating a schematic configuration of the moisture collection apparatus using the nonwoven sheet.

## DETAILED DESCRIPTION OF PREFERRED EMBODIMENTS

Hereinafter, the present embodiments will be described in detail with reference to the drawings. Note that components having the same function are denoted with the same reference symbols throughout all the drawings for describing the embodiments, and the repetitive description thereof will be omitted.

(First Embodiment)

<Nonwoven-Sheet Manufacturing Apparatus>

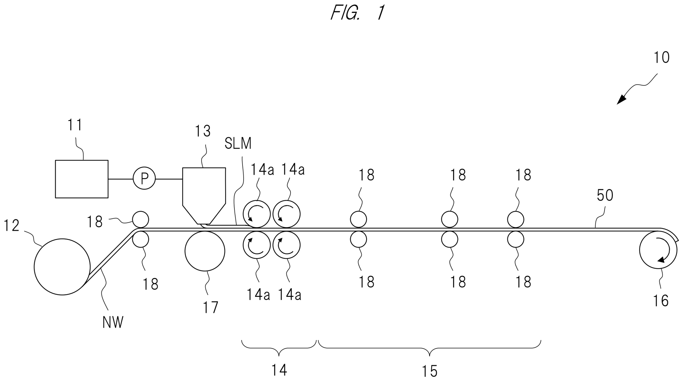

FIG. 1 is a diagram schematically illustrating a configuration of a nonwoven-sheet manufacturing apparatus according to the present embodiment.

This nonwoven-sheet manufacturing apparatus 10 illustrated in FIG. 1 includes: a raw material container 11 in which a liquid material LM containing a raw material and having a viscosity of 100000 mPa·s or less is adjusted and stored; a nonwoven-fabric carry-out part 12 feeding a nonwoven fabric NW; a coater 13 applying the liquid material LM onto the nonwoven fabric NW fed from the nonwoven-fabric carry-out part 12; an infiltration region 14 in which the sheet-shaped liquid material SLM applied on the nonwoven fabric NW is infiltrated into the nonwoven fabric NW; a solidification region 15 in which the liquid material SLM infiltrated in the nonwoven fabric NW is solidified, thereby providing an nonwoven sheet 50; and a sheet winder 16 winding up the nonwoven sheet 50 at a post stage of the solidification region 15.

The raw material container 11 is a container in which a liquid material containing a raw material and having a viscosity of 100000 mPa·s or less is adjusted and stored. The liquid material stored in this raw material container 11 can also be rephrased as a coating solution to be applied onto the nonwoven fabric NW by the coater 13 described later.

In this raw material container 11, the liquid material is adjusted to contain the raw material and have the viscosity of 100000 mPa·s or less. For example, if the raw material satisfies the above-described viscosity when being heated and melted, only the raw material can be stored in the raw material container 11. In this case, for the viscosity adjustment, a heating part that heats the raw material to satisfy the above-described viscosity may be included. This heating part is, for example, a heating source such as a heater, and the raw material may be heated by this heating source to keep the temperature thereof in the raw material container 11.

In addition, adjustment can also be made by mixing the raw material with a solvent to provide the liquid material having the viscosity of 100000 mPa·s or less. For example, if the raw material must be heated at a significantly high temperature so as to be heated and melted as described above or if it is difficult to achieve the viscosity to 100000 mPa·s even by the heating and melting, the viscosity can be adjusted to 100000 mPa·s or less by dissolving the raw material using the solvent. In addition, even in a raw material causing the viscosity of 100000 mPa·s or less by the heating and melting, the viscosity can also be adjusted using the solvent.

For providing a raw material solution from the mixture of the raw material and the solvent as described above, for example, a solvent supply part for supplying the solvent to this raw material container 11 is arranged to adjust a supply amount of the solvent such that the raw material solution (liquid material) is within the above-described viscosity range.

Note that the viscosity of the liquid material described here is the viscosity of the coating solution to be applied by the coater 13, and is preferably 10 to 80000 mPa·s, and more preferably 100 to 10000 mPa·s.

The nonwoven-fabric carry-out part 12 is a member having a configuration for feeding the nonwoven fabric NW. Here, the nonwoven fabric NW is a base material to be coated with the above-described liquid material. In this nonwoven-fabric carry-out part, the nonwoven fabric NW is wound in a roll shape, and the nonwoven fabric NW is continuously fed to the coater 13 so that its surface can be coated with the liquid material.

The coater 13 is an apparatus that applies the liquid material fed from the raw material container 11 by using a pump or the like onto the nonwoven fabric NW. As this coater 13, a publicly-known coater used for sheet molding can be used. For example, coaters such as a die coater, a gravure coater, a bar coater, and a blade coater that is of a type performing contact coating processing are exemplified. By the coater 13, the liquid material can be applied with a uniform width onto the nonwoven fabric NW. These coaters can be selected depending on, for example, the viscosity of the liquid material.

FIG. 1 illustrates a case of application of the die coater to this coater 13. In this case, a die coater of a slot die type that applies the liquid material onto the nonwoven fabric NW while extruding the liquid material from a die head is preferable. At this time, a back roll 17 is arranged, the back roll 17 being at a position facing a slit for discharging the liquid material of the coater 13 across the base material.

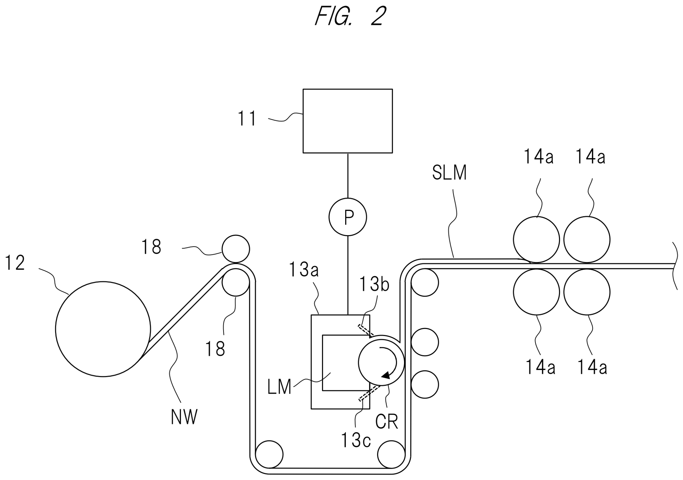

In addition, FIG. 2 illustrates a case of application of the gravure coater to the coater 13. FIG. 2 is a diagram illustrating a configuration that applies a liquid material LM onto the nonwoven fabric by using the gravure coater in the sheet manufacturing apparatus 10. Here, a cross-sectional structure of the gravure coater is illustrated to make its internal configuration understandable.

This gravure coater illustrated in FIG. 2 is a vertical-type coater, in which a chamber (tank) 13a is arranged in a vertical direction (that is a direction parallel to a gravity direction). This coater includes: the chamber (tank) 13a for storing the liquid material LM; a coating roll (gravure roll) CR having its portion immersed in the chamber (tank) 13a; a blade 13b for preventing spill of the liquid material LM and adjusting a liquid amount on a roll surface; and a second blade 13c for preventing leakage of the liquid material in the chamber (tank) and a coating solution from a gap between itself and the coating roll (gravure roll) CR.

The first blade 13b is arranged on a side of a rotation direction of the coating roll CR, such that an angle and a pressing pressure of the first blade 13b can be adjusted to adjust the liquid amount of the liquid material LM adhering to a surface of the coating roll CR. And, the liquid material LM adhering to the surface of the coating roll CR is transferred to the surface of the nonwoven fabric, thereby forming a sheet-shaped liquid material SLM.

Note that the chamber (tank) 13a of the gravure coater may be of either the vertical type or a horizontal type. The case of the horizontal type does not need the second blade 13c for preventing the leakage of the coating solution, and can provide a configuration only including the first blade 13b for preventing the spill of the liquid material LM and adjusting the liquid amount on the roll surface.

The infiltration region 14 is a region where the sheet-shaped liquid material SLM applied by the coater 13 is infiltrated into the nonwoven fabric NW. In this infiltration region 14, the sheet-shaped liquid material SLM is infiltrated into voids of fibers of the nonwoven fabric NW. The sheet-shaped liquid material SLM can be infiltrated into the nonwoven fabric NW by, for example, using an infiltration roll 14a to be arranged to sandwich the nonwoven fabric NW, on which the sheet-shaped liquid material SLM is applied, from upper and lower sides. In this case, FIG. 1 illustrates an example with two sets of the infiltration rolls 14a. However, the number of its sets may be one or three. Alternatively, the infiltration roll 14a may have a configuration capable of pressurizing the nonwoven fabric NW on which the sheet-shaped liquid material SLM is applied, to accelerate the infiltration.

Note that the infiltration of the liquid material LM into the nonwoven fabric NW may progress at the same time as the application of the liquid material LM from the coater 13 onto the nonwoven fabric NW, depending on relation between the viscosity of the used liquid material LM and an area weight of the nonwoven fabric NW. If the sufficient infiltration is achieved in this aspect, the infiltration member such as the infiltration roll 14a may not be arranged.

The solidification region 15 is a region where the nonwoven fabric NW infiltrated with the sheet-shaped liquid material SLM in the infiltration region 14 is solidified, thereby providing a nonwoven sheet 50. The solidified material at this time is the raw material. In this solidification region 15, if the liquid material is made of only the raw material, a temperature of the liquid material (raw material) infiltrated in the nonwoven fabric NW is decreased such that it is solidified. At this time, for example, cooling means is not particularly arranged, and the temperature of the raw material infiltrated in the nonwoven fabric NW can be naturally decreased at room temperature of about 25°C or the like such that it is solidified. Alternatively, the cooling means may be arranged, and the temperature of the raw material infiltrated in the nonwoven fabric NW may be actively decreased such that it is solidified.

Alternatively, if the liquid material is the raw material solution made of mixture of the raw material and the solvent, the solvent in the liquid material infiltrated in the nonwoven fabric NW is vaporized by heating or the like, such that it is solidified. At this time, heating means is not particularly arranged, and the solvent can be naturally vaporized at room temperature or the like such that it is solidified. Alternatively, the heating means such as the heater may be arranged, and the liquid material infiltrated in the nonwoven fabric NW may be actively heated to accelerate the vaporization of the solvent such that it is solidified.

The liquid material infiltrated in the nonwoven fabric NW is solidified as described above, thereby providing the nonwoven sheet 50 in which the nonwoven fabric NW and the raw material are blended.

The sheet winder 16 is a member that can wind up the provided nonwoven sheet 50 and that can house the nonwoven sheet 50 as a roll-shaped nonwoven sheet. The nonwoven sheet 50 wound up here can be provided as a product as the roll-shaped nonwoven sheet. In addition, this nonwoven sheet can be further processed to be provided as a sheet product, as needed.

In addition, a feeding roll 18 is preferably provided between the nonwoven-fabric carry-out part 12 and the sheet winder 16 such that the nonwoven fabric NW can be stably fed. The feeding roll 18 has a function of sandwiching the nonwoven fabric NW (the nonwoven fabric NW infiltrated with the liquid material or the nonwoven sheet 50 after the liquid material is applied) and feeding this to the post stage.

<Sheet Manufacturing Method>

Next, a sheet manufacturing method according to a first embodiment will be described. This sheet manufacturing method includes: a step (step (a)) of adjusting the liquid material containing the raw material and having the viscosity of 100000 mPa·s or less; a step (step (b)) of applying the liquid material to have a sheet shape onto the nonwoven fabric by the coater after the step (a); a step (step (c)) of infiltrating the liquid material into the nonwoven fabric after the step (b); a step (step (d)) of solidifying the liquid material infiltrated in the nonwoven fabric after the step (c), thereby providing the nonwoven sheet; and a step (step (e)) of winding up the nonwoven sheet after the step (d).

A sheet manufacturing method using the sheet manufacturing apparatus 10 described in FIG. 1 will be described below as a specific apparatus configuration.

First, the step (step (a)) of adjusting the liquid material containing the raw material and having the viscosity of 100000 mPa·s or less is performed.

In this step of adjusting the viscosity, the liquid material containing the raw material and having the viscosity of 100000 mPa·s or less is adjusted in the raw material container 11, as described above. For example, when the raw material is heated and melted to satisfy the above-described viscosity, only the raw material is stored in the raw material container 11, and the raw material is heated to satisfy the above-described viscosity, to make the viscosity adjustment.

In addition, when the raw material is mixed with the solvent and is adjusted to have the viscosity of 100000 mPa·s or less, a supply amount of the solvent is adjusted such that the raw material solution (liquid material) provided by mixing the solvent with the raw material is within the above-described viscosity range. In this case, temperature adjustment such as heating may be combined, as needed.

The viscosity of the liquid material in this step (a) is the viscosity of the coating solution to be applied by the coater 13 as described above, and is preferably 10 to 50000 mPa·s, and more preferably 100 to 10000 mPa·s.

Then, after the step (a), the step (step (b)) of applying the liquid material by the coater to have the sheet shape is performed.

In the present embodiment, the nonwoven-fabric carry-out part 12 is provided, and the liquid material LM is applied to have the sheet shape by the coater 13 onto the nonwoven fabric NW fed from this nonwoven-fabric carry-out part 12, thereby providing the sheet-shaped liquid material SLM (coating body).

The nonwoven fabric NW used here is not particularly limited, and a publicly-known nonwoven fabric can be used without any limitation. A material of the nonwoven fabric NW is, for example, inorganic fiber such as carbon fiber, glass fiber and a metal fiber, a chemical fiber such as nylon (polyamide), tetron, rayon, cupra, acetate, vinylon, acrylic material, polyethylene terephthalate (polyester), polypropylene, aramid, polyester, polyimide and polyacrylic material, or the like. In addition, natural fiber such as cellulose fiber, cotton, cotton linter, kapok, flax, cannabis, ramie, silk and sheep wool can be also used. Each of the carbon fiber, the glass fiber and the chemical fiber has a relatively high rigidity, and thus, is preferable because of increasing rigidity of the nonwoven sheet 50, thereby improving strength of the sheet itself.

An average fiber diameter of the fibers configuring the nonwoven fabric is preferably 0.1 μm to 0.5 mm, more preferably 0.4 μm to 200 μm. And, an average fiber length of fiber lengths of this fiber is preferably 1 mm to 200 mm. A thickness of the nonwoven fabric is preferably 10 μm to 5 mm, more preferably 20 μm to 3 mm.

An area weight of this nonwoven fabric NW is preferably 0.1 to 10000 g/m$^2$, more preferably 0.2 to 5000 g/m$^2$. Such a range of the fiber area weight can achieve not only the sufficient infiltration amount of the liquid material in the voids of the nonwoven fabric NW but also the retention of the strength of the nonwoven sheet 50. The area weight of this nonwoven fabric NW is preferably appropriately selected in comprehensive consideration of the design strengths such as the tensile strength, the bending strength and the fatigue strength of the nonwoven sheet 50 infiltrated with the liquid material, the heat resistance thereof and the like.

At this time, the application amount of the liquid material may be adjusted depending on the amount of the raw material infiltrated in the nonwoven fabric NW, and the thickness of the sheet-shaped liquid material SLM may be determined. That is, when the liquid material is made of only the raw material, all the infiltrated liquid material LM is solidified and becomes the nonwoven sheet 50, and thus, the coating is performed such that the application amount is the infiltration amount. Alternatively, when the raw material solution made of the mixture of the raw material and the solvent is used as the liquid material, the solvent in the infiltrated liquid material LM is vaporized, and the raw material component that is the residual is solidified and becomes the nonwoven sheet 50. Therefore, the coating is performed such that the application amount of the liquid material LM is determined in consideration of the amount of the raw material component.

In the application of the liquid material LM, the thickness of the sheet-shaped liquid material SLM to be applied is changed by various factors such as a carry speed of the nonwoven fabric NW, the viscosity of the liquid material LM to be used, and a discharge amount of the liquid material LM in the coater 13. Accordingly, these application conditions may be adjusted to achieve a target thickness.

The viscosity of the liquid material LM is set to 100000 mPa·s or less, as described above. The carry speed of the nonwoven fabric NW is, for example, preferably 1 to 500 m/min., and more preferably 5 to 300 m/min.

Note that the coater 13 is preferably selected depending on the viscosity of the liquid material LM. For example, a die coater is preferably used as the coater 13 when the viscosity of the liquid material LM is 1000 mPa·s or more, or a gravure coater is preferably used as the coater 13 when the viscosity of the liquid material LM is less than 1000 mPa·s. In addition, if the viscosity of the liquid material LM is 10000 mPa·s or more, a screw-shaped apparatus such as a single-screw extruder or a twinscrew extruder is preferably used instead of a pump.

Further, after the step (b), the step (step (c)) of infiltrating the liquid material LM into the nonwoven fabric NW is performed.

According to the present embodiment, in this infiltration region 14, the sheet-shaped liquid material SLM applied and thus formed on the nonwoven fabric NW is infiltrated into voids of fibers of the nonwoven fabric NW. In this infiltration operation, the sheet-shaped liquid material SLM can be infiltrated into the nonwoven fabric NW by, for example, using the infiltration roll 14a to be arranged to sandwich the nonwoven fabric NW, on which the sheet-shaped liquid material SLM is applied, from upper and lower sides.

As described above, the infiltration roll 14a may have a configuration capable of pressurizing the nonwoven fabric NW on which the sheet-shaped liquid material SLM is applied, to accelerate the infiltration. A pressure to be made by the infiltration roll 14a in this case is preferably 0.01 to 100 MPa, more preferably 0.1 to 50 MPa.

Note that the infiltration of the liquid material LM into the nonwoven fabric NW may progress at the same time as the application of the liquid material LM from the coater 13 onto the nonwoven fabric NW, depending on relation between the viscosity of the used liquid material LM and the area weight of the nonwoven fabric NW. If the sufficient infiltration is achieved in this aspect, the infiltration member such as the infiltration roll 14a may not be arranged.

Further, after the step (c), the step (step (d)) of solidifying the liquid material infiltrated in the nonwoven fabric NW, thereby providing the nonwoven sheet 50, is performed.

In the present embodiment, the liquid material infiltrated in the nonwoven fabric NW is solidified, thereby providing the nonwoven sheet 50 in which the nonwoven fabric NW and the liquid material (raw material) are blended. Here, the liquid material (raw material) is solidified in the solidification region 15.

If the liquid material is made of only the raw material, the liquid material infiltrated in the nonwoven fabric NW is solidified by decrease in the temperature thereof. At this time, for example, cooling means is not particularly arranged, and the temperature of the raw material can be naturally decreased at room temperature or the like such that it is solidified. Alternatively, the cooling means may be arranged, and the temperature of the raw material may be actively decreased such that it is solidified.

A solidification temperature at this time is specific to the raw material to be used, and may be a temperature lower than a glass transition point of the raw material or a melting point thereof. Because of such a temperature, the liquid raw material is solidified, thereby providing the sheet.

Alternatively, if the liquid material is the raw material solution made of mixture of the raw material and the solvent, the solvent in the liquid material infiltrated in the nonwoven fabric NW is vaporized by heating or the like, such that it is solidified. At this time, the solvent may be naturally vaporized at room temperature or the like. Alternatively, in order to improve the manufacturing efficiency, preferably, the heating means such as the heater may be arranged, and the nonwoven fabric NW infiltrated with the liquid material may be heated to accelerate the vaporization of the solvent such that it is solidified.

Then, after this solidification, the step (step (e)) of winding up the nonwoven sheet 50 is performed. Here, by the sheet winder 16, the nonwoven sheet 50 is wound up to have the roll shape. In this way, the nonwoven sheet as the product can be continuously provided.

By the configuration of the above embodiment, a nonwoven-sheet manufacturing technique having a wide applicable range can be provided, the technique being capable of preventing the formation of the sheet such as the neck-in shape that is significantly different from the desired shape sheet even when the liquid material having the low viscosity is used as the raw material, thereby significantly reducing the limitation of the raw material that can be used. And, the resultant nonwoven sheet as described above is provided as the sheet stronger than that made of only the raw material, and thus, is preferable because its handling is easy.

(Second Embodiment)

<Nonwoven-Sheet Manufacturing Apparatus>

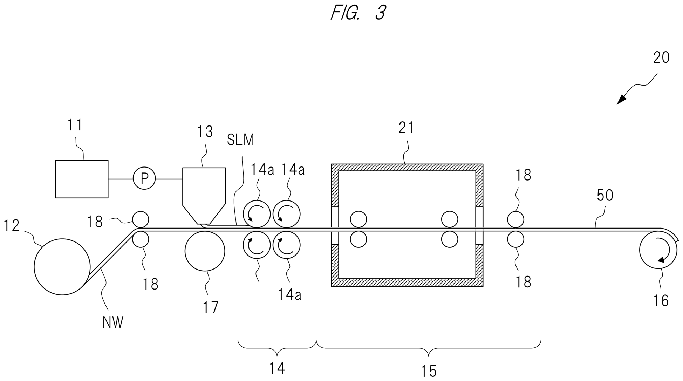

FIG. 3 is a diagram schematically illustrating a configuration of a nonwoven-sheet manufacturing apparatus according to another embodiment.

As similar to the above-described sheet manufacturing apparatus 10, a sheet manufacturing apparatus 20 illustrated in FIG. 3 includes: a raw material container 11 in which a liquid material containing a raw material and having a viscosity of 100000 mPa·s or less is adjusted and stored; a nonwoven-fabric carry-out part 12 feeding a nonwoven fabric NW; a coater 13 applying the liquid material onto the nonwoven fabric NW fed from the nonwoven-fabric carry-out part 12; an infiltration region 14 where the liquid material applied on the nonwoven fabric NW is infiltrated into the nonwoven fabric NW; a solidification region 15 where the liquid material infiltrated in the nonwoven fabric NW is solidified, thereby providing a nonwoven sheet 50; and a sheet winder 16 winding up the nonwoven sheet 50 at a post stage of the solidification region 15.

And, this sheet manufacturing apparatus 20 differs from the sheet manufacturing apparatus 10 in that it further includes a drying processing part 21. Hereinafter, description of the same configuration will be omitted, and the different configuration will be described in detail.

This sheet manufacturing apparatus 20 includes the drying processing part 21 in addition to the configuration of the sheet manufacturing apparatus 10, as described above. The drying processing part 21 is a member that is arranged in the solidification region 15 and that dries the solvent contained in the liquid material infiltrated in the nonwoven fabric NW. That is, this second embodiment is an embodiment with an aspect using the raw material solution (liquid material) made of the mixture of the raw material and the solvent as the liquid material.

This drying processing part 21 is provided to efficiently vaporize the solvent contained in the liquid material infiltrated in the nonwoven fabric NW in the step (d). Generally, the inside of the drying processing part 21 is under a heating atmosphere in order to accelerate the vaporization of the solvent. For the heating atmosphere, for example, gas (air, etc.) heated to a temperature set by a heat source such as a heater may be introduced into the drying processing part 21. At this time, an introduction operation for the heated gas is preferably continuously performed such that a temperature in the drying processing part 21 can be kept nearly at the set temperature.

As this heating temperature, an optimum temperature can be set depending on the solvent to be used. For example, if water or lower alcohol is used as the solvent, the heating temperature is preferably 50 to 90°C. However, its upper limit value is set to a temperature less than a boiling point of the solvent. By such a temperature range, the vaporization efficiency of the solvent can be significantly improved, and a situation such as occurrence of bubbles in the sheet due to boiling of the solvent can be avoided. In addition, in order to accelerate the vaporization and the drying, an air blower capable of blowing air toward the sheet-shaped liquid material SLM may be provided.

In addition, when the drying processing part 21 is arranged, a solvent collection mechanism that cools, liquefies, and collects the vaporized solvent generated in the drying processing part 21 may be provided. Since this solvent collection mechanism is arranged, the solvent can be reused. Further, the solvent collected here can also be reused while being circulated as a solvent for dissolving the raw material. By such reuse, cost for the nonwoven-sheet manufacturing operation in the present embodiment can be reduced, and the nonwoven sheet can be efficiently manufactured.

<Nonwoven-Sheet Manufacturing Method>

In the present embodiment, the nonwoven-sheet manufacturing apparatus 20 to be used differs from the nonwoven-sheet manufacturing apparatus 10 in whether or not it includes the drying processing part 21, as described above. Therefore, a basic operation in the nonwoven-sheet manufacturing method is the same as that of the first embodiment.

In addition to the operations of the first embodiment, this second embodiment includes a process of causing the drying processing part 21 to, by heating, vaporize and dry the solvent contained in the liquid material infiltrated in the nonwoven fabric NW, thereby efficiently providing the nonwoven sheet 50 in which the nonwoven fabric and the raw material are blended. This drying process is performed in the solidification region 15.

A heating temperature of this drying process is preferably a temperature accelerating the vaporization of the solvent to be used as described above, and an optimum temperature is set depending on the solvent to be used. This heating temperature is, for example, preferably 50 to 90°C when water or lower alcohol is used as the solvent. However, its upper limit value is set to a temperature less than a boiling point of the solvent. By such a temperature range, the vaporization efficiency of the solvent can be significantly improved, and a situation such as occurrence of bubbles in the sheet due to boiling of the solvent can be avoided. In addition, in order to accelerate the vaporization and the drying, an air blower capable of blowing air toward the sheet-shaped liquid material SLM may be provided.

In addition, by the solvent collection mechanism as described above, the solvent vaporized by the drying processing part 21 can be collected by being cooled and liquefied. The solvent collected as described above can be reused while being circulated as the solvent for the raw material.

<Raw Material>

Next, the raw materials respectively used in the first and second embodiments will be described. Here, the raw materials are not particularly limited, and each may be a liquid material having a viscosity of 100000 mPa·s or less as the liquid material to be applied by the coater 13 as described above. This liquid material may be adjusted by either the melting of the raw material or the mixture with the solvent and the dissolution.

This raw material is, for example, a resin as provided by, for example, injecting a liquid resin of a low viscosity, such as so-called injection-grade and spinning-grade liquid resin, from a die in molding of resin or the like.

Alternatively, a biodegradable material or the like can also be used as the raw material. A water-soluble material is suitable for the biodegradable material in the present invention, and is excellent in not only moldability but also a low environmental load because it is dissolved using water as the solvent to easily provide the liquid material of the low viscosity.

The raw material that can be used in the present embodiment is, for example, polysaccharide, gelatin or the like, and the polysaccharide is, for example, glucomannan, a cellulose-based material, pectin, starch, isomaltodextrin, agar or the like. Either single use of one type of them or combination use of two or more types of them is applicable. Particularly, the material preferably contains at least one type selected from the glucomannan, the cellulose-based material, gelatin, and the agar.

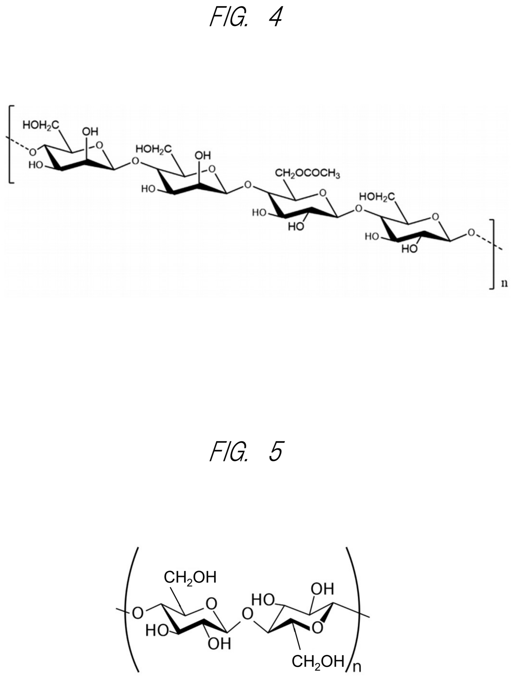

The glucomannan is a water-soluble polysaccharide contained at a rate of about 10% in a stem tuber of konjac yam, and can be extracted by distilling konjac powder with alcohol. The glucomannan is a polysaccharide having a chemical structure illustrated in FIG. 4 and containing D-glucose and D-mannose joined with β-1,4 bond at a ratio of 1 : 1.6 ("n" indicates the number of repetitions of a unit structure). The glucomannan has one branch per 50 to 60 sugars and a large molecular weight that may be more than 1,000,000.

The glucomannan used here preferably has a molecular weight in a range of 20 to 2,000,000. The glucomannan having such a molecular weight has a viscosity of 1000 to 20000 mPa·s when being added with 1 % by mass to water and melted.

Alternatively, the glucomannan has a large number of hydroxyl groups, and is dissolved by using alcohol as a solvent to easily have a low viscosity.

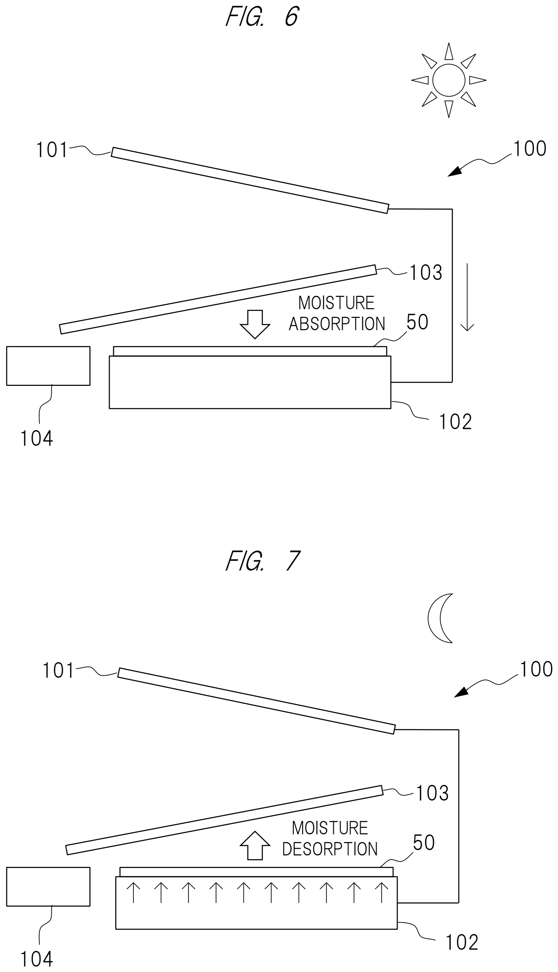

The cellulose-based material is cellulose or a material partially containing cellulose. The cellulose is a naturally-existing polymer in which a large number of β-glucose molecules are linearly polymerized by a glycosidic bond, and is a carbohydrate (polysaccharide) having a chemical structure illustrated in FIG. 6 and being represented by a molecular formula $(C_6H_{10}O_5)_n$. This cellulose-based material is also, for example, carboxymethylcellulose, cellulose nanofiber or the like.

The cellulose-based material used here preferably has a molecular weight in a range of 1000 to 500,000. The cellulose-based material having such a molecular weight has a viscosity of 50 to 50000 mPa·s when being heated at 20 to 60°C and melted.

Alternatively, the cellulose-based material has a large number of hydroxyl groups, and is dissolved by using alcohol as a solvent to easily have a low viscosity.

The gelatin is fibrous protein collagen, and the agar is obtained by freezing and drying a solidified mucus of red algae, and is insoluble in water as it is, but is melted by heating to have a low viscosity.

Further, the above-described liquid material can also contain a filler. The filler to be used is, for example, inorganic material such as alumina, silica, aluminum hydroxide, and boehmite, cellulose (including a cellulose nanofiber), carbon fiber, carbon nanotube, carbon nanofiber, graphene, fullerene, aramid fiber or the like. As the cellulose to be used, a cellulose in which a hydrophilic group is substituted with a hydrophobic group may be used.

(Third Embodiment)

<Nonwoven Sheet>

The nonwoven sheet of the present embodiment is made of a sheet-shaped body configured by infiltrating and solidifying the above-described liquid material having the low viscosity in the nonwoven fabric NW. The liquid material having the low viscosity is obtained by the melting of the raw material or the dissolution of the raw material in the solvent as described above. The raw material preferably contains at least one type selected from the glucomannan, the cellulose-based material, the gelatin, and the agar.

This nonwoven sheet 50 is made of an infiltration material including the nonwoven fabric NW and the liquid material infiltrated and solidified in this nonwoven fabric NW and having the low viscosity. This nonwoven sheet 50 may be a material obtained by performing various treatments to its surface. A thickness of the nonwoven sheet can be an optional thickness, and is, for example, preferably 10 μm to 5 mm, more preferably 20 μm to 3 mm.

A ratio of the nonwoven fabric and the solid (raw material) of this nonwoven sheet 50 can be set to an optional ratio. For example, the ratio of the solidified raw material to the entire nonwoven sheet is preferably 5 volume% or more and 90 volume% or less. When the ratio of the raw material is higher than that of the nonwoven fabric, a property derived from the solid component made of the raw material can be effectively demonstrated. In this case, the ratio of this raw material can be calculated by the following numerical expression (1).

Ratio of Raw Material [%] = (Volume of Solidified Raw Material) / (Volume of Nonwoven Sheet)                   (1)

In this case, when the ratio of the nonwoven fabric is high, the strength of the nonwoven sheet 50 can be improved. The ratio in this configuration may be determined depending on a purpose of the nonwoven sheet 50, and can be adjusted by appropriately selecting the nonwoven fabric and the liquid material to be used.

Alternatively, this nonwoven sheet can be formed into a sheet having a multilayer structure in which another layer is arranged on its surface. In the case, all the layers may be the nonwoven sheet of the present embodiment. Alternatively, some of the layers may be the nonwoven sheet of the present embodiment while the other layers may be stacked as a sheet (either a sheet made of the nonwoven fabric or a nonwoven sheet not made of the nonwoven fabric) other than the sheet of the present embodiment. That is, the sheet may have one or more layers of the nonwoven sheet used in the present embodiment.

A case where the glucomannan is used as the raw material of this nonwoven sheet will be specifically described. The glucomannan of 0.5 mass% is added to water serving as the solvent, thereby providing the liquid material having the viscosity of 10000 mPa·s.

The nonwoven sheet can be manufactured from the liquid material provided by the addition to the solvent as described above, by using, for example, the nonwoven-sheet manufacturing apparatus 10 illustrated in FIG. 1. At this time, for example, a nonwoven fabric made of polyethylene (PE) having a width of 50 cm, a thickness of 2 mm, an area weight of 500 g/cm$^2$ and a porosity of 50% is used as the nonwoven fabric NW, and the liquid material LM is applied onto the nonwoven fabric NW at a discharge amount of 3000 mL/min., from the coater 13 (die coater) at a carry speed of the nonwoven fabric NW of 0.1 m/sec., and having a slit width of 1 mm from which the liquid material LM is discharged.

The liquid material LM is infiltrated into the nonwoven fabric NW by, for example, using the infiltration roll 14a to sandwich the nonwoven fabric NW, on which the sheet-shaped liquid material SLM is formed, from upper and lower sides at a pressure of 1 MPa in the infiltration region 14. The nonwoven fabric is carried by the feeding roll 19 while being solidified by natural cooling at room temperature to provide the nonwoven sheet 50. This nonwoven sheet 50 having a thickness of 2 mm is wound up by the sheet winder 16 to provide the roll-shaped nonwoven sheet 50.

The nonwoven sheet made of the glucomannan provided as described above can be used as a water-absorbing sheet to which the moisture absorbency of the raw material is applied.

The sheet made of the glucomannan provided as described above can be used as a water-absorbing sheet to which the moisture absorbency of the raw material is applied. An example of use of this water-absorbing sheet will be described with reference to FIGs. 6 and 7. In these drawings, an arrow indicates movement of heat energy.

FIGs. 6 and 7 respectively illustrate examples of a case where the nonwoven sheet 50 made of the glucomannan is applied as the water-absorbing sheet while using sunlight. A moisture collection apparatus 100 illustrated here includes a heat collector 101, a heat storage tank 102, an inclined plate 103, and a moisture collection container 104.

The heat collector 101 is an apparatus capable of, for example, extracting heat energy from sunlight and moving the heat energy to the heat storage tank 102. The heat storage tank 102 is a portion that stores heat collected by the heat collector 101, and the stored heat can be used to heat the nonwoven sheet 50 at a desired timing. The inclined plate 103 is a plate-shaped body arranged on an upper side of the nonwoven sheet 50 while inclining. This inclined plate 103 cools and liquefies moisture released from the nonwoven sheet 50, and guides the moisture to the moisture collection container 104. The moisture collection container 104 is a container that stores the liquefied water guided by the inclined plate 103.

This moisture collection apparatus 100 is, for example, used as follows. First, as illustrated in FIG. 6, during the day, the heat energy of sunlight is collected by the heat collector 101, and the heat energy collected here is stored in the heat storage tank 102. Here, the nonwoven sheet 50 is exposed to an external atmosphere, and absorbs moisture (water vapor) contained in the air. The nonwoven sheet 50 made of the glucomannan has excellent moisture absorbency as described above, and can retain much moisture.

Then, at night after sunset, as illustrated in FIG. 7, the heat energy stored in the heat storage tank 102 is used to heat the nonwoven sheet 50. The heating is set at a temperature at which the moisture absorbed in the nonwoven sheet 50 is released (desorbed), and is preferably, for example, 80 to 100°C. Here, the moisture released from the nonwoven sheet 50 is diffused upward, and is in contact with the inclined plate 103, and is liquefied on its surface. The liquefied moisture flows along the inclination of the inclined plate 103 to a lower side of the inclined plate 103, is guided into the moisture collection container 104, and is finally stored in the moisture collection container 104.

In the foregoing, the present invention has been concretely described based on the embodiments and the examples. However, it is needless to say that the present invention is not limited to the foregoing embodiments and examples, and various modifications can be made within the scope of the present invention.

EXPLANATION OF REFERENCE CHARACTERS

10, 20  sheet manufacturing apparatus
11  raw material container
12  nonwoven-fabric carry-out part
13  coater
14  infiltration region

15  solidification region
16  sheet winder
17  back roll
18  feeding roll
21  drying processing part
50  nonwoven sheet
LM  liquid material
NW  nonwoven fabric
SLM  sheet-shaped liquid material

**Claims**

1. A nonwoven-sheet manufacturing method comprising steps of:

   (a) adjusting a liquid material containing a raw material and having a viscosity of 100000 mPa·s or less;
   (b) after the step (a), applying the liquid material to have a sheet shape onto a nonwoven fabric by a coater;
   (c) after the step (b), infiltrating the liquid material into the nonwoven fabric;
   (d) after the step (c), solidifying the liquid material infiltrated in the nonwoven fabric, thereby providing a nonwoven sheet; and
   (e) after the step (d), winding up the nonwoven sheet.

2. The nonwoven-sheet manufacturing method according to claim 1,
   wherein the nonwoven fabric is made of a material containing at least one type selected from polyester, polypropylene, polyethylene, rayon, nylon, polyethylene terephthalate, aramid glass fiber and carbon fiber.

3. The nonwoven-sheet manufacturing method according to claim 1,
   wherein an area weight of the nonwoven fabric is in a range of 0.1 g/m$^2$ to 10000 g/m$^2$.

4. The nonwoven-sheet manufacturing method according to claim 1,
   wherein in the step (c), the liquid material is infiltrated by an infiltration roll arranged on upper and lower sides of the nonwoven fabric.

5. The nonwoven-sheet manufacturing method according to claim 4,
   wherein in the step (c), the nonwoven fabric is pressurized by the infiltration roll.

6. The nonwoven-sheet manufacturing method according to claim 5,
   wherein a pressure made by the infiltration roll is 0.01 to 100 MPa.

7. The nonwoven-sheet manufacturing method according to claim 1,
   wherein a powdery filler containing at least one type selected from glucomannan, cellulose-based material, gelatin, and agar is used as the raw material.

8. The nonwoven-sheet manufacturing method according to claim 1,

   wherein the liquid material contains the raw material and a solvent, and
   the step (d) includes a drying processing step of vaporizing the solvent by heating.

9. The nonwoven-sheet manufacturing method according to claim 8,
   wherein the solvent is water or alcohol.

10. A nonwoven-sheet manufacturing apparatus comprising:

a raw material container in which a liquid material containing a raw material and having a viscosity of 100000 mPa·s or less is adjusted and stored;

a nonwoven-fabric carry-out part feeding a nonwoven fabric;

a coater applying the liquid material to have a sheet shape onto the nonwoven fabric fed from the nonwoven-fabric carry-out part;

an infiltration region in which the applied liquid material is infiltrated into the nonwoven fabric;

a solidification region in which the liquid material infiltrated in the nonwoven fabric is solidified to form a nonwoven sheet; and

a sheet winder winding up the nonwoven sheet provided by the solidification of the liquid material.

11. The nonwoven-sheet manufacturing apparatus according to claim 10,
wherein the solidification region includes a drying processing part vaporizing a solvent in the sheet by heating.

12. The nonwoven-sheet manufacturing apparatus according to claim 11,

wherein the liquid material contains the raw material and a solvent, and
the solidification region includes a collector collecting the vaporized solvent.

13. A nonwoven sheet comprising:

a nonwoven fabric; and
an infiltration material infiltrated and solidified in the nonwoven fabric and containing at least one type selected from glucomannan, cellulose-based material, gelatin, and agar.

14. The nonwoven sheet according to claim 13,
wherein the nonwoven sheet has a multilayer structure in which two or more layers are stacked, and has one or more layers of the nonwoven sheet.

*FIG. 1*

10

11  13  SLM

14a  14a  18  18  18  50

12  18

18  17  14a  14a  18  18  18  16

NW

14  15

*FIG. 2*

*FIG. 3*

FIG. 4

FIG. 5

## FIG. 6

## FIG. 7

## INTERNATIONAL SEARCH REPORT

| International application No. |
| --- |
| **PCT/JP2023/042002** |

| A. | CLASSIFICATION OF SUBJECT MATTER |
| --- | --- |

*D04H 1/645*(2012.01)i; *B05D 7/00*(2006.01)i; *C08J 5/04*(2006.01)i; *D06M 15/05*(2006.01)i
FI: D04H1/645; B05D7/00 G; C08J5/04 CFG; D06M15/05

According to International Patent Classification (IPC) or to both national classification and IPC

| B. | FIELDS SEARCHED |
| --- | --- |

Minimum documentation searched (classification system followed by classification symbols)

D04H1/645; B05D7/00; C08J5/04; D06M15/05

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2000-300463 A (UNI-CHARM CO., LTD.) 31 October 2000 (2000-10-31) | 1-3, 7-14 |
| | claims, paragraphs [0029], [0033], [0049]-[0058], fig. 3, examples | |
| Y | | 4-6 |
| X | JP 2000-300464 A (UNI-CHARM CO., LTD.) 31 October 2000 (2000-10-31) | 1-3, 7-14 |
| | claims, paragraphs [0038], [0042], [0055]-[0070], fig. 3-7, examples | |
| Y | | 4-6 |
| X | CN 112706477 A (HENAN PROVINCE YADU INDUSTRIAL CO., LTD.) 27 April 2021 (2021-04-27) | 13, 14 |
| | claims, examples | |
| X | CN 108018716 A (MEI, Qingbo) 11 May 2018 (2018-05-11) | 13, 14 |
| | claims, examples | |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 February 2024** | **13 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| | International application No. |
|---|---|
| | **PCT/JP2023/042002** |

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 112111976 A (ZHEJIANG CHANGFENG NEW MATERIAL CO., LTD.) 22 December 2020 (2020-12-22) claims, examples | 13, 14 |
| Y | KR 2017-0044435 A (GENIC CO., LTD.) 25 April 2017 (2017-04-25) claims, paragraphs [0054], [0055], [0068]-[0095], examples | 4-6 |

**INTERNATIONAL SEARCH REPORT**
**Information on patent family members**

International application No.

**PCT/JP2023/042002**

| Patent document cited in search report | | | Publication date (day/month/year) | Patent family member(s) | Publication date (day/month/year) |
|---|---|---|---|---|---|
| JP | 2000-300463 | A | 31 October 2000 | (Family: none) | |
| JP | 2000-300464 | A | 31 October 2000 | US 2002/0065011 A1 claims, paragraphs [0059], [0064], [0086]-[0105], fig. 3-7, examples EP 1046747 A1 | |
| CN | 112706477 | A | 27 April 2021 | (Family: none) | |
| CN | 108018716 | A | 11 May 2018 | (Family: none) | |
| CN | 112111976 | A | 22 December 2020 | (Family: none) | |
| KR | 2017-0044435 | A | 25 April 2017 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020146853 A